# EUROPEAN PATENT APPLICATION

(11) **EP 2 995 667 A1**
(43) Date of publication of application: **16.03.2016**
(21) Application number: 15190267.3
(22) Date of filing: 19.12.2012
(51) Int. Cl.: C09K 5/04, F25B 30/02

(54) **USE OF E-1,1,1,4,4,5,5,5-OCTAFLUORO-2-PENTENE IN HIGH TEMPERATURE HEAT PUMPS**

(30) Priority: 21.12.2011 US 201161578370 P
(62) Divisional of application: 12806866.5
(71) Applicant: E. I. du Pont de Nemours and Company, Wilmington, DE 19898 (US)
(72) Inventor: Kontomaris, Konstantinos, Wilmington, Delaware 19808 (US)
(74) Representative: Matthews, Derek Peter

(57) **Abstract**

This invention relates to a method for producing heating in a high temperature heat pump. The method comprises condensing a vapor working fluid comprising E-HFO-1438mzz, in a condenser, thereby producing a liquid working fluid. This invention also relates to a method of raising the maximum feasible condenser operating temperature in a high temperature heat pump apparatus. This method comprises charging the high temperature heat pump with a working fluid comprising E-HFO-1438mzz. This invention also relates to a high temperature heat pump apparatus containing a working fluid comprising E-HFO-1438mzz.

## Description

### CROSS REFERENCE(S) TO RELATED APPLICATION(S)

This application claims the priority benefit of U.S. Provisional Patent Application No. 61/578,370, filed December 21, 2011.

### FIELD OF THE INVENTION

This invention relates to methods and systems having utility in numerous applications, and in particular, in high temperature heat pumps.

### BACKGROUND OF THE INVENTION

The compositions of the present invention are part of a continued search for the next generation of low global warming potential materials. Such materials must have low environmental impact, as measured by ultra-low global warming potential and zero ozone depletion potential. New high temperature heat pump working fluids are needed.

### SUMMARY OF THE INVENTION

This invention relates to methods and systems using E-1,1,1,4,4,5,5,5-octafluoro-2-pentene (i.e., E-HFO-1438mzz).

Embodiments of the present invention involve the compound E-HFO-1438mzz, either alone or in combination with one or more other compounds as described in detail herein below.

In accordance with this invention, a method for producing heating in a high temperature heat pump is provided. The method comprises condensing a vapor working fluid comprising E-1,1,1,4,4,5,5,5-octafluoro-2-pentene (E-HFO-1438mzz) in a condenser, thereby producing a liquid working fluid, wherein the condenser operating temperature is geater than 55°C.

Also in accordance with this invention, a method of raising the maximum feasible condenser operating temperature in a high temperature heat pump apparatus is provided. The method comprises charging the high temperature heat pump with a working fluid comprising E-HFO-1438mzz.

Also in accordance with this invention, a high temperature heat pump apparatus is provided. The apparatus contains a working fluid comprising E-HFO-1438mzz and comprises (a) an evaporator through which a working fluid flows and is evaporated; (b) a compressor in fluid communication with the evaporator that compresses the evaporated working fluid to a higher pressure; (c) a condenser in fluid communication with the compressor through which the high pressure working fluid vapor flows and is condensed; and (d) a pressure reduction device in fluid communication with the condenser wherein the pressure of the condensed working fluid is reduced and said pressure reduction device further being in fluid communication with the evaporator such that the working fluid then repeats flow through components (a), (b), (c) and (d) in a repeating cycle.

### BRIEF DESCRIPTION OF THE DRAWINGS

Figure 1 is a schematic diagram of one embodiment of a flooded evaporator heat pump apparatus according to the present invention.
Figure 2 is a schematic diagram of one embodiment of a direct expansion heat pump apparatus according to the present invention.
Figure 3 is a schematic diagram of a cascade heating pump system according to the present invention.

### DETAILED DESCRIPTION OF PREFERRED EMBODIMENTS

Before addressing details of embodiments described below, some terms are defined or clarified.

Global warming potential (GWP) is an index for estimating relative global warming contribution due to atmospheric emission of a kilogram of a particular greenhouse gas compared to emission of a kilogram of carbon dioxide. GWP can be calculated for different time horizons showing the effect of atmospheric lifetime for a given gas. The GWP for the 100 year time horizon is commonly the value referenced.

Ozone depletion potential (ODP) is defined in "The Scientific Assessment of Ozone Depletion, 2002, A report of the World Meteorological Association's Global Ozone Research and Monitoring Project," section 1.4.4, pages 1.28 to 1.31 (see first paragraph of this section). ODP represents the extent of ozone depletion in the stratosphere expected from a compound on a mass-for-mass basis relative to fluorotrichloromethane (CFC-11).

Refrigeration capacity (sometimes referred to as cooling capacity) is a term to define the change in enthalpy of a refrigerant or working fluid in an evaporator per unit mass of refrigerant or working fluid circulated. Volumetric cooling capacity refers to the amount of heat removed by the refrigerant or working fluid in the evaporator per unit volume of refrigerant vapor exiting the evaporator. The refrigeration capacity is a measure of the ability of a refrigerant, working fluid or heat transfer composition to produce cooling. Therefore, the higher the volumetric cooling capacity of the working fluid, the greater the cooling rate that can be produced at the evaporator with the maximum volumetric flow rate achievable with a given compressor. Cooling rate refers to the heat removed by the refrigerant in the evaporator per unit time.

Similarly, volumetric heating capacity is a term to define the amount of heat supplied by the refrigerant or working fluid in the condenser per unit volume of refrigerant or working fluid vapor entering the compressor. The higher the volumetric heating capacity of the refrigerant or working fluid, the greater the heating rate that is produced at the condenser with the maximum volumetric flow rate achievable with a given compressor.

Coefficient of performance (COP) is the amount of heat removed in the evaporator divided by the energy required to operate the compressor. The higher the COP, the higher the energy efficiency. COP is directly related to the energy efficiency ratio (EER), that is, the efficiency rating for refrigeration or air conditioning equipment at a specific set of internal and external temperatures.

As used herein, a heat transfer medium (also referred to herein as a heating medium) comprises a composition used to carry heat from a body to be cooled to the chiller evaporator or from the chiller condenser to a cooling tower or other configuration where heat can be rejected to the ambient.

As used herein, a working fluid comprises a compound or mixture of compounds that function to transfer heat in a cycle wherein the working fluid undergoes a phase change from a liquid to a gas and back to a liquid in a repeating cycle.

Subcooling is the reduction of the temperature of a liquid below that liquid's saturation point for a given pressure. The saturation point is the temperature at which a vapor composition is completely condensed to a liquid (also referred to as the bubble point). But subcooling continues to cool the liquid to a lower temperature liquid at the given pressure. By cooling a liquid below the saturation temperature, the net refrigeration capacity can be increased. Subcooling thereby improves refrigeration capacity and energy efficiency of a system. Subcool amount is the amount of cooling below the saturation temperature (in degrees) or how far below its saturation temperature a liquid composition is cooled.

Superheat is a term that defines how far above its saturation vapor temperature (the temperature at which, if the composition is cooled, the first drop of liquid is formed, also referred to as the "dew point") a vapor composition is heated.

Temperature glide (sometimes referred to simply as "glide") is the absolute value of the difference between the starting and ending temperatures of a phase-change process by a refrigerant within a component of a refrigerant system, exclusive of any subcooling or superheating. This term may be used to describe condensation or evaporation of a near azeotrope or non-azeotropic composition.

An azeotropic composition is a mixture of two or more different components which, when in liquid form under a given pressure, will boil at a substantially constant temperature, which temperature may be higher or lower than the boiling temperatures of the individual components, and which will provide a vapor composition essentially identical to the overall liquid composition undergoing boiling. (see, e.g., M. F. Doherty and M.F. Malone, Conceptual Design of Distillation Systems, McGraw-Hill (New York), 2001, 185-186, 351-359).

Accordingly, the essential features of an azeotropic composition are that at a given pressure, the boiling point of the liquid composition is fixed and that the composition of the vapor above the boiling composition is essentially that of the overall boiling liquid composition (i.e., no fractionation of the components of the liquid composition takes place). It is also recognized in the art that both the boiling point and the weight percentages of each component of the azeotropic composition may change when the azeotropic composition is subjected to boiling at different pressures. Thus, an azeotropic composition may be defined in terms of the unique relationship that exists among the components or in terms of the compositional ranges of the components or in terms of exact weight percentages of each component of the composition characterized by a fixed boiling point at a specified pressure.

For the purpose of this invention, an azeotrope-like composition means a composition that behaves substantially like an azeotropic composition (i.e., has constant boiling characteristics or a tendency not to fractionate upon boiling or evaporation). Hence, during boiling or evaporation, the vapor and liquid compositions, if they change at all, change only to a minimal or negligible extent. This is to be contrasted with non-azeotrope-like compositions in which during boiling or evaporation, the vapor and liquid compositions change to a substantial degree.

As used herein, the terms "comprises," "comprising," "includes," "including," "has," "having" or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The transitional phrase "consisting of" excludes any element, step, or ingredient not specified. If in the claim such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" is used to define a composition, method or apparatus that includes materials, steps, features, components, or elements, in addition to those literally disclosed provided that these additional included materials, steps, features, components, or elements do materially affect the basic and novel characteristic(s) of the claimed invention. The term 'consisting essentially of occupies a middle ground between "comprising" and 'consisting of.

Where applicants have defined an invention or a portion thereof with an open-ended term such as "comprising," it should be readily understood that (unless otherwise stated) the description should be interpreted to also describe such an invention using the terms "consisting essentially of" or "consisting of."

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the present invention, suitable methods and materials are described below. All publications, patent applications, patents, and other references mentioned herein are incorporated by reference in their entirety, unless a particular passage is cited. In case of conflict, the present specification, including definitions, will control. In addition, the materials, methods, and examples are illustrative only and not intended to be limiting.

E-1,1,1,4,4,5,5,5-octafluoro-2-pentene, also known as E-HFO-1438mzz, may be made by methods known in the art, such as described in PCT Patent Publication No. WO2009/079525 by reacting CF₃CF₂CCl₂CF₂CF₃(CFC-41-10mca) with hydrogen in the presence of a dehalogenation catalyst to produce CF₃CF₂CCl=CFCF₃(CFC-1419myx); reacting CF₃CF₂CCl=CFCF₃(CFC-1419myx) with hydrogen in the presence of a dehalogenation catalyst to produce CF₃CF₂C=CCF₃ (octafluoro-2-pentyne); and reacting CF₃CF₂C≡CCF₃, in a pressure vessel, with an hydrogenation catalyst to produce CF₃CF₂CH=CHCF₃ (1,1,1,4,4,5,5,5-octafluoro-2-pentene).

### High temperature heat pump methods

In accordance with this invention, a method is provided for producing heating in a high temperature heat pump having a condenser wherein a vapor working fluid is condensed to heat a heat transfer medium and the heated heat transfer medium is transported out of the condenser to a body to be heated. The method comprises condensing a vapor working fluid comprising E-HFO-1438mzz in the condenser.

In one embodiment is provided a method for producing heating in a high temperature heat pump comprising condensing a vapor working fluid comprising E-HFO-1438mzz and optionally HFC-245eb (1,1,1,2,3-pentafluoropropane), in a condenser, thereby producing a liquid working fluid. Of note are methods wherein a vapor working fluid consisting essentially of E-HFO-1438mzz. Also of note are methods wherein a vapor working fluid consisting essentially of E-HFO-1438mzz and HFC-245eb is condensed.

In one embodiment, the method for producing heating uses a working fluid comprising E-HFO-1438mzz and optionally HFC-245eb. Of note are working fluids that consist essentially of E-HFO-1438mzz and optionally HFC-245eb wherein the amount of E-HFO-1438mzz is at least 1 weight percent. Also of note are working fluid compositions consisting essentially of E-HFO-1438mzz. Of particular note are working fluids consisting essentially of E-HFO-1438mzz and HFC-245eb. Also of particular note are working fluids comprising from 1 weight percent to 99 weight percent E-HFO-1438mzz and from 99 weight percent to weight percent HFC-245eb.

Of note for use in methods for producing heat are compositions comprising E-HFO-1438mzz and HFC-245eb that are non-flammable. It is expected that certain compositions comprising E-HFO-1438mzz and HFC-245eb are non-flammable by standard test ASTM 681. Of particular note are compositions containing E-HFO-1438mzz and HFC-245eb with at least 35 weight percent E-HFO-1438mzz. Also of particular note are compositions containing E-HFO-1438mzz and HFC-245eb with at least 36 weight percent E-HFO-1438mzz. Also of particular note are compositions containing E-HFO-1438mzz and HFC-245eb with at least 37 weight percent E-HFO-1438mzz. Also of particular note are compositions containing E-HFO-1438mzz and HFC-245eb with at least 38 weight percent E-HFO-1438mzz. Also of particular note are compositions containing E-HFO-1438mzz and HFC-245eb at least 39 weight percent E-HFO-1438mzz. Also of particular note are compositions containing E-HFO-1438mzz and HFC-245eb at least 40 weight percent E-HFO-1438mzz.

Of particular utility in the method for producing heating are those embodiments wherein the working fluid consists essentially of E-HFO-1438mzz and optionally HFC-245eb. Also of particular utility are those embodiments wherein the refrigerant is azeotropic or azeotrope-like.

Also of particular utility in the method for producing heating are those embodiments wherein the working fluid has a low GWP. Compositions for use in the method for producing heat will have GWP less than 150 when the amount of E-HFO-1438mzz is at least 54 weight percent.

In one embodiment, the heating is produced in a heat pump comprising said condenser, further comprising passing a heat transfer medium through the condenser, whereby said condensation of working fluid heats the heat transfer medium, and passing the heated heat transfer medium from the condenser to a body to be heated. A body to be heated may be any space, object or fluid that may be heated. In one embodiment, a body to be heated may be a room, building, or the passenger compartment of an automobile. Alternatively, in another embodiment, a body to be heated may be a heat transfer medium or heat transfer fluid.

In one embodiment, the heat transfer medium is water and the body to be heated is water. In another embodiment, the heat transfer medium is water and the body to be heated is air for space heating. In another embodiment, the heat transfer medium is an industrial heat transfer liquid and the body to be heated is a chemical process stream.

In another embodiment, the method to produce heating further comprises compressing the working fluid vapor in a centrifugal compressor.

In one embodiment, the heating is produced in a heat pump having a condenser comprising passing a heat transfer medium to be heated through said condenser, thus heating the heat transfer medium. In one embodiment, the heat transfer medium is air, and the heated air from the condenser is passed to a space to be heated. In another embodiment, the heat transfer medium is a portion of a process stream, and the heated portion is returned to the process.

In some embodiments, the heat transfer medium (or heating medium) may be selected from water or glycol (such as ethylene glycol or propylene glycol). Of particular note is an embodiment wherein the first heat transfer medium is water and the body to be cooled is air for space cooling.

In another embodiment, the heat transfer medium may be an industrial heat transfer liquid, wherein the body to be heated is a chemical process stream, which includes process lines and process equipment such as distillation columns. Of note are industrial heat transfer liquids including ionic liquids, various brines such as aqueous calcium or sodium chloride, glycols such as propylene glycol or ethylene glycol, methanol, and other heat transfer media such as those listed in section 4 of the 2006 ASHRAE Handbook on Refrigeration.

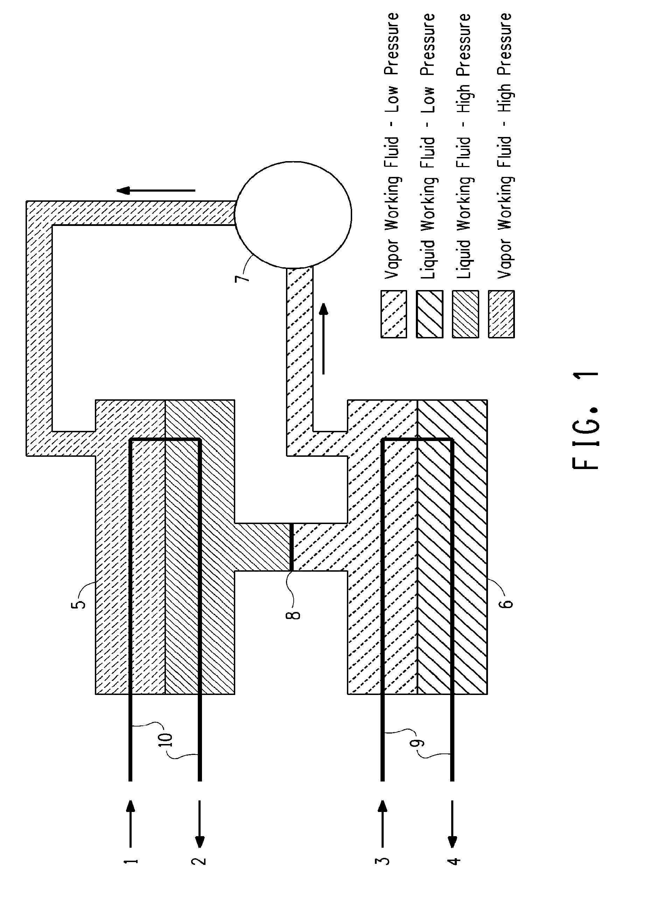

In one embodiment, the method for producing heating comprises extracting heat in a flooded evaporator high temperature heat pump as described above with respect to Figure 1. In this method, the liquid working fluid is evaporated to form a working fluid vapor in the vicinity of a first heat transfer medium. The first heat transfer medium is a warm liquid, such as water, which is transported into the evaporator via a pipe from a low temperature heat source. The warm liquid is cooled and is returned to the low temperature heat source or is passed to a body to be cooled, such as a building. The working fluid vapor is then condensed in the vicinity of a second heat transfer medium, which is a chilled liquid which is brought in from the vicinity of a body to be heated (heat sink). The second heat transfer medium cools the working fluid such that it is condensed to form a liquid working fluid. In this method a flooded evaporator heat pump may also be used to heat domestic or service water or a process stream.

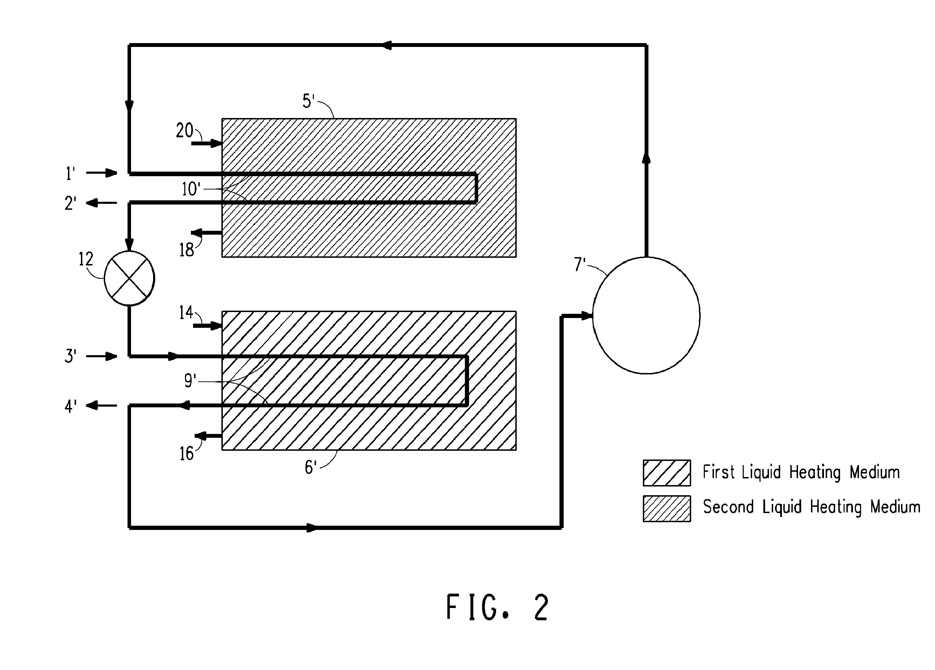

In another embodiment, the method for producing heating comprises producing heating in a direct expansion high temperature heat pump as described above with respect to Figure 2. In this method, the liquid working fluid is passed through an evaporator and evaporates to produce a working fluid vapor. A first liquid heat transfer medium is cooled by the evaporating working fluid. The first liquid heat transfer medium is passed out of the evaporator to a low temperature heat source or a body to be cooled. The working fluid vapor is then condensed in the vicinity of a second heat transfer medium, which is a chilled liquid which is brought in from the vicinity of a body to be heated (heat sink). The second heat transfer medium cools the working fluid such that it is condensed to form a liquid working fluid. In this method, a direct expansion heat pump may also be used to heat domestic or service water or a process stream.

In one embodiment of the method for producing heating, the high temperature heat pump includes a compressor which is a centrifugal compressor.

In another embodiment of the invention is disclosed a method of raising the maximum feasible condenser operating temperature in a high temperature heat pump apparatus comprising charging the high temperature heat pump with a working fluid comprising E-HFO-1438mzz and optionally HFC-245eb.

Use of E-HFO-1438mzz and optionally HFC-245eb in high temperature heat pumps increases the capability of these heat pumps because it allows operation at condenser temperatures higher than achievable with working fluids used in similar systems today. The condenser temperature achieved with CFC-114 is the highest achievable with current systems. Table 1 provides the critical temperature (Tcr) for compositions containing HFC-245eb and E-HFO-1438mzz. With equipment designed for these high temperatures, it is possible to achieve a condenser operating temperature at or just below the critical temperatures shown in Table 1.

**TABLE 1**

| **mass fraction E-HFO-1438mzz (in HFC-245eb/E-1438mzz composition)** | **T_{cr}(°C)** | **P_{cr} (MPa)** |
|---|---|---|
| 1.0 | 149.8 | 2.17 |
| 0.9 | 150.0 | 2.38 |
| 0.8 | 150.4 | 2.52 |
| 0.7 | 150.8 | 2.65 |
| 0.6 | 151.4 | 2.74 |
| 0.5 | 152.2 | 2.88 |
| 0.4 | 153.3 | 2.99 |
| 0.3 | 154.9 | 3.11 |
| 0.2 | 157.1 | 3.25 |
| 0.1 | 160.5 | 3.44 |
| 0.0 | 165.6 | 3.87 |

When CFC-114 is used as the working fluid in a high temperature heat pump, the maximum feasible condenser operating temperature is about 120°C. In one embodiment of the method to raise the maximum feasible condenser operating temperature, when a composition comprising E-HFO-1438mzz and optionally HFC-245eb, is used as the heat pump working fluid, the maximum feasible condenser operating temperature is raised to a temperature greater than about 100°C.

In another embodiment of the method to raise the maximum feasible condenser operating temperature, when a composition comprising E-HFO-1438mzz and optionally HFC-245eb, is used as the heat pump working fluid, the maximum feasible condenser operating temperature is raised to a temperature greater than about 120°C.In another embodiment of the method to raise the maximum feasible condenser operating temperature, when a composition comprising E-HFO-1438mzz and optionally HFC-245eb, is used as the heat pump working fluid, the maximum feasible condenser operating temperature is raised to a temperature greater than about 135°C.

In another embodiment of the method to raise the maximum feasible condenser operating temperature, when a composition comprising E-HFO-1438mzz and optionally HFC-245eb, is used as the heat pump working fluid, the maximum feasible condenser operating temperature is raised to a temperature greater than about 170°C.

It may be feasible that temperatures as high as 170°C are achievable with a high temperature heat pump utilizing E-HFO-1438mzz and optionally HFC-245eb. However at temperatures above 155°C, some modification of compressor, or compressor materials, may be necessary.

In accordance with this invention it is possible to replace a high temperature heat pump fluid (for example, CFC-114 or HFC-245fa) in a system originally designed for said high temperature heat pump fluid with a working fluid comprising E-HFO-1438mzz and optionally HFC-245eb in order to raise the condenser operating temperature.

In accordance with this invention it is also possible to use a working fluid comprising E-HFO-1438mzz and optionally HFC-245eb in a system originally designed as a chiller using a conventional chiller working fluid (for example a chiller using HFC-134a or HCFC-123 or HFC-245fa) for the purpose of converting the system to a high temperature heat pump system. For example, a conventional chiller working fluid can be replaced in an existing chiller system with a working fluid comprising E-HFO-1438mzz and optionally HFC-245eb to achieve this purpose.

In accordance with this invention it is also possible to use a working fluid comprising E-HFO-1438mzz and optionally HFC-245eb in a system originally designed as a comfort (i.e., low temperature) heat pump system using a conventional comfort heat pump working fluid (for example a heat pump using HFC-134a or HCFC-123 or HFC-245fa) for the purpose of converting the system to a high temperature heat pump system. For example, a conventional comfort heat pump working fluid can be replaced in an existing comfort heat pump system with a working fluid comprising E-HFO-1438mzz and optionally HFC-245eb to achieve this purpose.

A composition comprising E-HFO-1438mzz and optionally HFC-245eb enables the design and operation of dynamic (e.g. centrifugal) or positive displacement (e.g. screw or scroll) heat pumps for upgrading heat available at low temperatures to meet demands for heating at higher temperatures. The available low temperature heat is supplied to the evaporator and the high temperature heat is extracted at the condenser. For example, waste heat can be available to be supplied to the evaporator of a heat pump operating at 25°C at a location (e.g. a hospital) where heat from the condenser, operating at 85°C, can be used to heat water (e.g. for hydronic space heating or other service).

In some cases heat may be available from various other sources (e.g. waste heat from process streams, geothermal heat or solar heat) at temperatures higher than suggested above, while heating at even higher temperatures may be required. For example, waste heat may be available at 100°C while heating at 130°C may be required for an industrial application. The lower temperature heat can be supplied to the evaporator of a dynamic (e.g. centrifugal) or positive displacement heat pump in the method or system of this invention to be uplifted to the desired temperature of 130°C and be delivered at the condenser.

### High Temperature Heat Pump Apparatus

In one embodiment of the present invention is provided a heat pump apparatus containing a working fluid comprising E-HFO-1438mzz and optionally HFC-245eb. Of note are embodiments wherein the working fluid consists essentially of E-HFO-1438mzz or wherein the working fluid consists essentially of E-HFO-1438mzz and HFC-245eb.

A heat pump is a type of apparatus for producing heating and/or cooling. A heat pump includes an evaporator, a compressor, a condenser, and an expansion device. A working fluid circulates through these components in a repeating cycle. Heating is produced at the condenser where energy (in the form of heat) is extracted from the vapor working fluid as it is condensed to form liquid working fluid. Cooling is produced at the evaporator where energy is absorbed to evaporate the working fluid to form vapor working fluid.

The high temperature heat pump apparatus of the present invention comprises (a) an evaporator through which a working fluid flows and is evaporated; (b) a compressor in fluid communication with the evaporator that compresses the evaporated working fluid to a higher pressure; (c) a condenser in fluid communication with the compressor through which the high pressure working fluid vapor flows and is condensed; and (d) a pressure reduction device in fluid communication with the condenser wherein the pressure of the condensed working fluid is reduced and said pressure reduction device further being in fluid communication with the evaporator such that the working fluid then repeats flow through components (a), (b), (c) and (d) in a repeating cycle.

In one embodiment, the high temperature heat pump apparatus uses a working fluid comprising E-HFO-1438mzz and optionally HFC-245eb. Of note are working fluids that consist essentially of E-HFO-1438mzz and optionally HFC-245eb wherein the amount of E-HFO-1438mzz is at least about 1 weight percent. Also of particular note, are working fluids comprising from about 1 weight percent to about 99 weight percent E-HFO-1438mzz and from about 99 weight percent to about 1 weight percent HFC-245eb.

Any of the compositions described herein can be used in a high temperature heat pump. Of note for use in high temperature heat pump apparatus are compositions E-HFO-1438mzz and HFC-245eb that are non-flammable. It is expected that certain compositions comprising E-HFO-1438mzz and HFC-245eb are non-flammable by standard test ASTM 681. Of particular note are compositions containing E-HFO-1438mzz and HFC-245eb with at least 35 weight percent E-HFO-1438mzz. Also of particular note are compositions containing E-HFO-1438mzz and HFC-245eb with at least 36 weight percent E-HFO-1438mzz. Also of particular note are compositions containing E-HFO-1438mzz and HFC-245eb with at least 37 weight percent E-HFO-1438mzz. Also of particular note are compositions containing E-HFO-1438mzz and HFC-245eb with at least 38 weight percent E-HFO-1438mzz. Also of particular note are compositions containing E-HFO-1438mzz and HFC-245eb at least 39 weight percent E-HFO-1438mzz. Also of particular note are compositions containing E-HFO-1438mzz and HFC-245eb at least 40 weight percent E-HFO-1438mzz.

Of particular utility in the high temperature heat pump apparatus are those embodiments wherein the working fluid consists essentially of E-HFO-1438mzz and optionally HFC-245eb. Also of particular utility are those embodiments wherein the refrigerant is azeotropic or azeotrope-like.

Also of particular utility in the high temperature heat pump apparatus are those embodiments wherein the working fluid has a low GWP. Compositions for use in the high temperature heat pump apparatus will have GWP less than 150 when the amount of E-HFO-1438mzz is at least 54 weight percent in a composition consisting essentially of E-HFO-1438mzz and optionally HFC-245eb.

Heat pumps may include flooded evaporators one embodiment of which is shown in Figure 1, or direct expansion evaporators one embodiment of which is shown in Figure 2.

Heat pumps may utilize positive displacement compressors or centrifugal compressors. Positive displacement compressors include reciprocating, screw, or scroll compressors. Of note are heat pumps that use screw compressors. Also of note are heat pumps that use centrifugal compressors.

Residential heat pumps are used to produce heated air to warm a residence or home (including single family or multi-unit attached homes) and produce maximum condenser operating temperatures from about 30°C to about 50°C.

Of note are high temperature heat pumps that may be used to heat air, water, another heat transfer medium or some portion of an industrial process, such as a piece of equipment, storage area or process stream. These heat pumps can produce maximum condenser operating temperatures greater than about 55°C. The maximum condenser operating temperature that can be achieved in a high temperature heat pump will depend upon the working fluid used. This maximum condenser operating temperature is limited by the normal boiling characteristics of the working fluid and also by the pressure to which the heat pump's compressor can raise the vapor working fluid pressure. This maximum pressure is also related to the working fluid used in the heat pump.

Of particular value are high temperature heat pumps that operate at condenser temperatures of at least about 100°C. E-HFO-1438mzz enables the design and operation of centrifugal heat pumps, operated at condenser temperatures higher than those accessible with many currently available working fluids. A working fluid comprising E-HFO-1438mzz and HFC-245eb may enable the design and operation of heat pumps, operated at condenser temperatures higher than those accessible with many currently available working fluids.

Also of note are heat pumps that are used to produce heating and cooling simultaneously. For instance, a single heat pump unit may produce hot water for domestic use and may also produce cooling for comfort air conditioning in the summer.

Heat pumps, including both flooded evaporator and direct expansion, may be coupled with an air handling and distribution system to provide comfort air conditioning (cooling and dehumidifying the air) and/or heating to residence (single family or attached homes) and large commercial buildings, including hotels, office buildings, hospitals, universities and the like. In another embodiment, heat pumps may be used to heat water.

To illustrate how heat pumps operate, reference is made to the Figures. A flooded evaporator heat pump is shown in Figure 1.

In this heat pump a first heat transfer medium, which is a warm liquid, which comprises water, and, in some embodiments, additives, or other heat transfer medium such as a glycol (e.g., ethylene glycol or propylene glycol), enters the heat pump carrying heat from a low temperature source (not shown), such as a building air handling system or warmed-up water from condensers of a chiller plant flowing to a cooling tower, shown entering the heat pump at arrow **3,** through a tube bundle or coil **9**, in an evaporator **6**, which has an inlet and an outlet. The warm first heat transfer medium is delivered to evaporator **6**, where it is cooled by liquid working fluid, which is shown in the lower portion of evaporator **6.** The liquid working fluid evaporates at a lower temperature than the warm first heat transfer medium which flows through tube bundle or coil **9.** The cooled first heat transfer medium re-circulates back to the low temperature heat source as shown by arrow **4**, via a return portion of tube bundle or coil **9.** The liquid working fluid, shown in the lower portion of evaporator **6**, vaporizes and is drawn into compressor **7**, which increases the pressure and temperature of the working fluid vapor. Compressor **7** compresses this vapor so that it may be condensed in condenser **5** at a higher pressure and temperature than the pressure and temperature of the working fluid vapor when it exits evaporator **6.** A second heat transfer medium enters the condenser via a tube bundle or coil **10** in condenser **5** from a location where high temperature heat is provided ("heat sink") such as a domestic or service water heater or a hydronic heating system at arrow **1.** The second heat transfer medium is warmed in the process and returned via a return loop of tube bundle or coil **10** and arrow **2** to the heat sink. This second heat transfer medium cools the working fluid vapor in condenser **5** and causes the vapor to condense to liquid working fluid, so that there is liquid working fluid in the lower portion of condenser **5.** Condensed liquid working fluid in condenser **5** flows back to evaporator **6** through expansion device **8,** which may be an orifice, capillary tube or expansion valve. Expansion device **8** reduces the pressure of the liquid working fluid, and converts the liquid working fluid partially to vapor, that is to say that the liquid working fluid flashes as pressure drops between condenser **5** and evaporator **6.** Flashing cools the working fluid, i.e., both the liquid working fluid and the working fluid vapor to the saturated temperature at evaporator pressure, so that both liquid working fluid and working fluid vapor are present in evaporator **6.**

In some embodiments the working fluid vapor is compressed to a supercritical state and condenser **5** is replaced by a gas cooler where the working fluid vapor is cooled to a liquid state without condensation.

In some embodiments the first heat transfer medium used in the apparatus depicted in Figure 1 is chilled water returning from a building where air conditioning is provided or from some other body to be cooled. Heat is extracted from the returning chilled water at the evaporator **6** and the cooled chilled water is supplied back to the building or other body to be cooled. In this embodiment the apparatus depicted in Figure 1 functions to simultaneously cool the first heat transfer medium that provides cooling to a body to be cooled (e.g. building air) and heat the second heat transfer medium that provides heating to a body to be heated (e.g. domestic or service water or process stream).

It is understood that the apparatus depicted in Figure 1 can extract heat at the evaporator **6** from a wide variety of heat sources including solar, geothermal and waste heat and supply heat from the condenser **5** to a wide range of heat sinks.

It should be noted that for a single component working fluid composition, the composition of the vapor working fluid in the evaporator and condenser is the same as the composition of the liquid working fluid in the evaporator and condenser. In this case, evaporation will occur at a constant temperature. However, if a working fluid blend (or mixture) is used, as in the present invention, the liquid working fluid and the working fluid vapor in the evaporator (or in the condenser) may have different compositions. This may lead to inefficient systems and difficulties in servicing the equipment, thus a single component working fluid is more desirable. An azeotrope or azeotrope-like composition will function essentially as a single component working fluid in a heat pump, such that the liquid composition and the vapor composition are essentially the same reducing any inefficiencies that might arise from the use of a non-azeotropic or non-azeotrope-like composition.

One embodiment of a direct expansion heat pump is illustrated in FIG. 2. In the heat pump as illustrated in FIG. 2, first liquid heat transfer medium, which is a warm liquid, such as warm water, enters evaporator **6'** at inlet **14.** Mostly liquid working fluid (with a small amount of working fluid vapor) enters coil **9'** in the evaporator at arrow **3'** and evaporates. As a result, first liquid heating medium is cooled in evaporator **6',** and a cooled first liquid heating medium exits evaporator **6'** at outlet **16,** and is sent to low temperature heat source (e.g. warm water flowing to a cooling tower). The working fluid vapor exits evaporator **6'** at arrow **4'** and is sent to compressor **7',** where it is compressed and exits as high temperature, high pressure working fluid vapor. This working fluid vapor enters condenser **5'** through condenser coil **10'** at **1'.** The working fluid vapor is cooled by a second liquid heating medium, such as water, in condenser **5'** and becomes a liquid. The second liquid heating medium enters condenser **5'** through condenser heat transfer medium inlet **20.** The second liquid heating medium extracts heat from the condensing working fluid vapor, which becomes liquid working fluid, and this warms the second liquid heating medium in condenser **5'.** The second liquid heating medium exits from condenser **5'** through condenser heat transfer medium outlet **18.** The condensed working fluid exits condenser **5'** through lower coil **10'** and flows through expansion device **12,** which may be an orifice, capillary tube or expansion valve. Expansion device **12** reduces the pressure of the liquid working fluid. A small amount of vapor, produced as a result of the expansion, enters evaporator **6'** with liquid working fluid through coil **9'** and the cycle repeats. In some embodiments the working fluid vapor is compressed to a supercritical state and vessel **5'** in Figure 2 represents a gas cooler where the working fluid vapor is cooled to a liquid state without condensation.

In some embodiments the first liquid heating medium used in the apparatus depicted in Figure 2 is chilled water returning from a building where air conditioning is provided or from some other body to be cooled. Heat is extracted from the returning chilled water at the evaporator **6'** and the cooled chilled water is supplied back to the building or other body to be cooled. In this embodiment the apparatus depicted in Figure 2 functions to simultaneously cool the first heat transfer medium (may be referred to as a liquid heating medium - but in this case actually functions to cool) that provides cooling to a body to be cooled (e.g. building air) and heat the second heat transfer medium (or liquid heating medium) that provides heating to a body to be heated (e.g. domestic or service water or process stream).

It is understood that the apparatus depicted in Figure 2 can extract heat at the evaporator **6'** from a wide variety of heat sources including solar, geothermal and waste heat and supply heat from the condenser **5'** to a wide range of heat sinks.

Compressors useful in the present invention include dynamic compressors. Of note as examples of dynamic compressors are centrifugal compressors. A centrifugal compressor uses rotating elements to accelerate the working fluid radially, and typically includes an impeller and diffuser housed in a casing. Centrifugal compressors usually take working fluid in at an impeller eye, or central inlet of a circulating impeller, and accelerate it radially outward. Some static pressure rise occurs in the impeller, but most of the pressure rise occurs in the diffuser section of the casing, where velocity is converted to static pressure. Each impeller- diffuser set is a stage of the compressor. Centrifugal compressors are built with from 1 to 12 or more stages, depending on the final pressure desired and the volume of refrigerant to be handled.

The pressure ratio, or compression ratio, of a compressor is the ratio of absolute discharge pressure to the absolute inlet pressure. Pressure delivered by a centrifugal compressor is practically constant over a relatively wide range of capacities. The pressure a centrifugal compressor can develop depends on the tip speed of the impeller. Tip speed is the speed of the impeller measured at its tip and is related to the diameter of the impeller and its revolutions per minute The tip speed required in a specific application depends on the compressor work that is required to elevate the thermodynamic state of the working fluid from evaporator to condenser conditions. The volumetric flow capacity of the centrifugal compressor is determined by the size of the passages through the impeller. This makes the size of the compressor more dependent on the pressure required than the volumetric flow capacity required.

Also of note as examples of dynamic compressors are axial compressors. A compressor in which the fluid enters and leaves in the axial direction is called an axial flow compressor. Axial compressors are rotating, airfoil- or blade-based compressors in which the working fluid principally flows parallel to the axis of rotation. This is in contrast with other rotating compressors such as centrifugal or mixed-flow compressors where the working fluid may enter axially but will have a significant radial component on exit. Axial flow compressors produce a continuous flow of compressed gas, and have the benefits of high efficiencies and large mass flow capacity, particularly in relation to their cross-section. They do, however, require several rows of airfoils to achieve large pressure rises making them complex and expensive relative to other designs.

Compressors useful in the present invention also include positive displacement compressors. Positive displacement compressors draw vapor into a chamber, and the chamber decreases in volume to compress the vapor. After being compressed, the vapor is forced from the chamber by further decreasing the volume of the chamber to zero or nearly zero.

Of note as examples of positive displacement compressors are reciprocating compressors. Reciprocating compressors use pistons driven by a crankshaft. They can be either stationary or portable, can be single or multi-staged, and can be driven by electric motors or internal combustion engines. Small reciprocating compressors from 5 to 30 hp are seen in automotive applications and are typically for intermittent duty. Larger reciprocating compressors up to 100 hp are found in large industrial applications. Discharge pressures can range from low pressure to very high pressure (above 5000 psi or 35 MPa).

Also of note as examples of positive displacement compressors are screw compressors. Screw compressors use two meshed rotating positive-displacement helical screws to force the gas into a smaller space. Screw compressors are usually for continuous operation in commercial and industrial application and may be either stationary or portable. Their application can be from 5 hp (3.7 kW) to over 500 hp (375 kW) and from low pressure to very high pressure (above 1200 psi or 8.3 MPa).

Also of note as examples of positive displacement compressors are scroll compressors. Scroll compressors are similar to screw compressors and include two interleaved spiral-shaped scrolls to compress the gas. The output is more pulsed than that of a rotary screw compressor.

In one embodiment, the high temperature heat pump apparatus may comprise more than one heating circuit (or loop). The performance (coefficient of performance for heating and volumetric heating capacity) of high temperature heat pumps operated with E-HFO-1438mzz or E-HFO-1438mzz and HFC-245eb as the working fluid is drastically improved when the evaporator is operated at temperatures approaching the condenser temperature required by the application. When the heat supplied to the evaporator is only available at low temperatures, thus requiring high temperature lifts leading to poor performance, a dual fluid/dual circuit cascade cycle configuration will be advantageous. The low stage or low temperature circuit of the cascade cycle would be operated with a fluid of lower boiling point than E-HFO-1438mzz (or E-HFO-1438mzz and HFC-245eb) and preferably with a low GWP, such as Z-HFO-1336mzz, HFO-1234yf, E-HFO-1234ze, HFO-1234ye (1,2,3,3-tetrafluoropropene), HFO-1243zf (3,3,3-trifluoropropene), HFC-32 (difluoromethane), HFC-125 (pentafluoroethane), HFC-134a (1,1,1,2-tetrafluoroethane), HFC-134 (1,1,2,2-tetrafluoroethane), HFC-143a (1,1,1-trifluoroethane), HFC-152a (1,1-difluoroethane), HFC-227ea (1,1,1,2,3,3,3-heptafluoropropene) and their blends such as HFO-1234yf/HFC-32, HFO-1234yf/HFC-32/HFC-125, HFO-1234yf/HFC-134a, HFO-1234yf/HFC-134a/HFC-32, HFO-1234yf/HFC-134, HFO-1234yf/HFC-134a/HFC-134, HFO-1234yf/HFC-32/HFC-125/HFC-134a, E-HFO-1234ze/HFC-32, E-HFO-1234ze/HFC-32/HFC-125, E-HFO-1234ze/HFC-134a, E-HFO-1234ze/HFC-134, E-HFO-1234ze/HFC-134a/HFC-134, E-HFO-1234ze/HFC-227ea, E-HFO-1234ze/HFC-134/HFC-227ea, E-HFO-1234ze/HFC-134/HFC-134a/HFC-227ea, HFO-1234yf/E-HFO-1234ze/HFC-134/HFC-134a/HFC-227ea, etc..

The evaporator of the low temperature circuit (or low temperature loop) of the cascade cycle receives the available low temperature heat, lifts the heat to a temperature intermediate between the temperature of the available low temperature heat and the temperature of the required heating duty and transfers the heat to the high stage or high temperature circuit (or high temperature loop) of the cascade system at a cascade heat exchanger. Then the high temperature circuit, operated with E-HFO-1438mzz (or E-HFO-1438mzz and HFC-245eb), further lifts the heat received at the cascade heat exchanger to the required condenser temperature to meet the intended heating duty. The cascade concept can be extended to configurations with three or more circuits lifting heat over wider temperature ranges and using different fluids over different temperature sub-ranges to optimize performance.

In one embodiment of the high temperature heat pump apparatus having more than one stage, the first working fluid comprises at least one fluoroolefin selected from the group consisting of HFO-1234yf, E-HFO-1234ze, HFO-1234ye (E- or Z- isomer), and HFC-1243zf.

In another embodiment of the high temperature heat pump apparatus having more than one stage, the first working fluid comprises at least one fluoroalkane selected from the group consisting of HFC-32, HFC-125, HFC-134a, HFC-134, HFC-143a, HFC-152a and HFC-227ea.

In another embodiment of the high temperature heat pump apparatus having more than one stage, the working fluid of the stage preceding the final stage comprises at least one fluoroolefin selected from the group consisting of HFO-1234yf, E-HFO-1234ze, HFO-1234ye (E- or Z- isomer), and HFC-1243zf.

In another embodiment of the high temperature heat pump apparatus having more than one stage, wherein the working fluid of the stage preceding the final stage comprises at least one fluoroalkane selected from the group consisting of HFC-32, HFC-125, HFC-134a, HFC-134, HFC-143a, HFC-152a and HFC-227ea. In accordance with the present invention, there is provided a cascade heat pump system having at least two heating loops for circulating a working fluid through each loop. In one embodiment, the high temperature heat pump apparatus has at least two heating stages arranged as a cascade heating system, wherein each stage is in thermal communication with the next stage and wherein each stage circulates a working fluid therethrough, wherein heat is transferred to the final stage from the immediately preceding stage and wherein the heating fluid of the final stage comprises HFC-245eb and optionally Z-HFO-1336mzz.

In another embodiment the high temperature heat pump apparatus has at least two heating stages arranged as a cascade heating system, each stage circulating a working fluid therethrough comprising (a) a first expansion device for reducing the pressure and temperature of a first working fluid liquid; (b) an evaporator in fluid communication with the first expansion device having an inlet and an outlet;(c) a first compressor in fluid communication with the evaporator and having an inlet and an outlet;(d) a cascade heat exchanger system in fluid communication with the first compressor and having: (i) a first inlet and a first outlet, and (ii) a second inlet and a second outlet in thermal communication with the first inlet and outlet; (e) a second compressor in fluid communication with the second outlet of the cascade heat exchanger and having an inlet and an outlet; (f) a condenser in fluid communication with the second compressor and having an inlet and an outlet; and (g) a second expansion device in fluid communication with the condenser; wherein the second working fluids comprises E-HFO-1438mzz and optionally HFC-245eb.

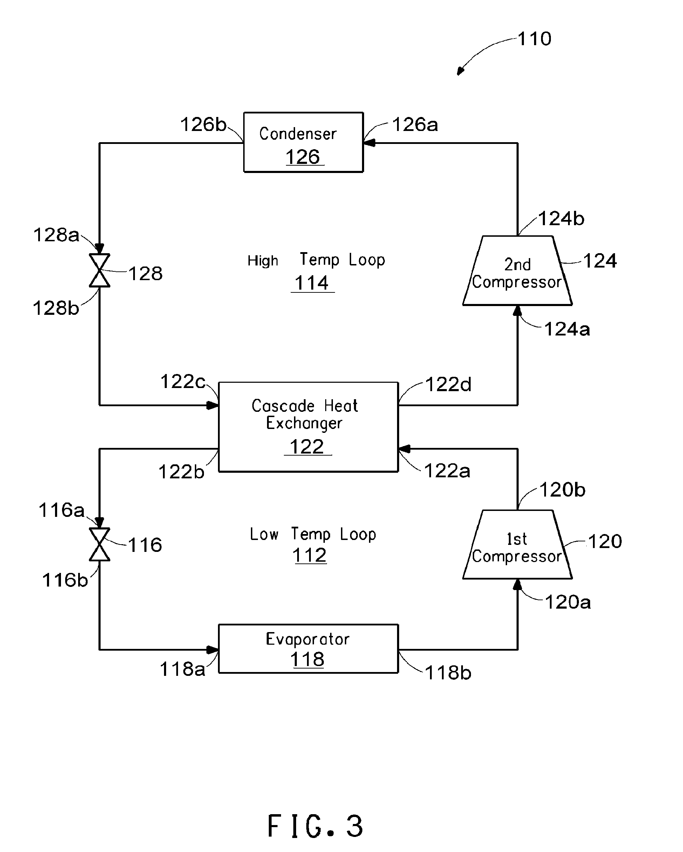

In accordance with the present invention, there is provided a cascade heat pump system having at least two heating loops for circulating a working fluid through each loop. One embodiment of such a cascade system is shown generally at **110** in FIG. 3. Cascade heat pump system **110** of the present invention has at least two heating loops, including a first, or lower loop **112,** which is a low temperature loop, and a second, or upper loop **114,** which is a high temperature loop **114.** Each circulates a working fluid therethrough.

Cascade heat pump system **110** includes first expansion device **116.** First expansion device **116** has an inlet **116a** and an outlet **116b.** First expansion device **116** reduces the pressure and temperature of a first working fluid liquid which circulates through the first or low temperature **loop 112.**

Cascade heat pump system **110** also includes evaporator **118.** Evaporator **118** has an inlet **118a** and an outlet **118b.** The first working fluid liquid from first expansion device **116** enters evaporator **118** through evaporator inlet **118a** and is evaporated in evaporator **118** to form a first working fluid vapor. The first working fluid vapor then circulates to evaporator outlet **118b.**

Cascade heat pump system **110** also includes first compressor **120.** First compressor **120** has an inlet **120a** and an outlet **120b.** The first working fluid vapor from evaporator **118** circulates to inlet **120a** of first compressor **120** and is compressed, thereby increasing the pressure and the temperature of the first working fluid vapor. The compressed first working fluid vapor then circulates to the outlet **120b** of the first compressor **120.**

Cascade heat pump system **110** also includes cascade heat exchanger system **122.** Cascade heat exchanger **122** has a first inlet **122a** and a first outlet **122b.** The first working fluid vapor from first compressor **120** enters first inlet **122a** of heat exchanger **122** and is condensed in heat exchanger **122** to form a first working fluid liquid, thereby rejecting heat. The first working fluid liquid then circulates to first outlet **122b** of heat exchanger **122.** Heat exchanger **122** also includes a second inlet **122c** and a second outlet **122d.** A second working fluid liquid circulates from second inlet **122c** to second outlet **122d** of heat exchanger **122** and is evaporated to form a second working fluid vapor, thereby absorbing the heat rejected by the first working fluid (as it is condensed). The second working fluid vapor then circulates to second outlet **122d** of heat exchanger **122.** Thus, in the embodiment of FIG. 3, the heat rejected by the first working fluid is directly absorbed by the second working fluid.

Cascade heat pump system **110** also includes second compressor **124.** Second compressor **124** has an inlet **124a** and an outlet **124b.** The second working fluid vapor from cascade heat exchanger **122** is drawn into compressor **124** through inlet **124a** and is compressed, thereby increasing the pressure and temperature of the second working fluid vapor. The second working fluid vapor then circulates to outlet **124b** of second compressor **124.**

Cascade heat pump system **110** also includes condenser **126** having an inlet **126a** and an outlet **126b.** The second working fluid from second compressor **124** circulates from inlet **126a** and is condensed in condenser **126** to form a second working fluid liquid, thus producing heat. The second working fluid liquid exits condenser **126** through outlet **126b.**

Cascade heat pump system **110** also includes second expansion device **128** having an inlet **128a** and an outlet **128b.** The second working fluid liquid passes through second expansion device **128,** which reduces the pressure and temperature of the second working fluid liquid exiting condenser **126.** This liquid may be partially vaporized during this expansion. The reduced pressure and temperature second working fluid liquid circulates to second inlet **122c** of cascade heat exchanger system **122** from expansion device **128.**

Moreover, the stability of E-HFO-1438mzz at temperatures higher than its critical temperature enables the design of heat pumps operated according to a supercritical/transcritical cycle in which heat is rejected by the working fluid in a supercritical state and made available for use over a range of temperatures (including temperatures higher than the critical temperature of E-HFO-1438mzz). The supercritical fluid is cooled to a liquid state without a passing through an isothermal condensation transition.

For high temperature condenser operation (associated with high temperature lifts and high compressor discharge temperatures) formulations of working fluid (e.g. E-HFO-1438mzz or E-HFO-1438mzz and HFC-245eb) and lubricants with high thermal stability (possibly in combination with oil cooling or other mitigation approaches) will be advantageous.

For high temperature condenser operation (associated with high temperature lifts and high compressor discharge temperatures) the use of magnetic centrifugal compressors (e.g. Danfoss-Turbocor type) that do not require the use of lubricants will be advantageous.

For high temperature condenser operation (associated with high temperature lifts and high compressor discharge temperatures) the use of compressor materials (e.g. shaft seals, etc) with high thermal stability may also be required.

The compositions comprising E-HFO-1438mzz and optionally HFC-245eb may be used in a high temperature heat pump apparatus in combination with molecular sieves to aid in removal of moisture. Desiccants may be composed of activated alumina, silica gel, or zeolite-based molecular sieves. In some embodiments, the molecular sieves are most useful with a pore size of approximately 3 Angstroms to 6 Angstroms. Representative molecular sieves include MOLSIV XH-7, XH-6, XH-9 and XH-11 (UOP LLC, Des Plaines, IL).

### High Temperature Heat Pump Compositions

Any of the compositions described herein can be used in a high temperature heat pump. Of note are compositions comprising E-HFO-1438mzz and HFC-245eb that are particularly useful in high temperature heat pumps, which are azeotropic or azeotrope-like. Azeotropic compositions will have zero glide in the heat exchangers, e.g., evaporator and condenser, of a high temperature heat pump.

It has been disclosed that E-HFO-1438mzz and HFC-245eb form azeotropic and azeotrope-like compositions in U.S. Provisional Patent Application serial no. 61/439,389, filed February 4, 2011 (now published as PCT International Patent Application Publication No. WO2012/106656, published August 9, 2012).

Of note are any compositions comprising E-HFO-1438mzz and HFC-245eb that are non-flammable. It is expected that certain compositions comprising E-HFO-1438mzz and HFC-245eb are non-flammable by standard test ASTM 681. Of particular note are compositions containing E-HFO-1438mzz and HFC-245eb with at least 35 weight percent E-HFO-1438mzz. Also of particular note are compositions containing E-HFO-1438mzz and HFC-245eb with at least 36 weight percent E-HFO-1438mzz. Also of particular note are compositions containing E-HFO-1438mzz and HFC-245eb with at least 37 weight percent E-HFO-1438mzz. Also of particular note are compositions containing E-HFO-1438mzz and HFC-245eb with at least 38 weight percent E-HFO-1438mzz. Also of particular note are compositions containing E-HFO-1438mzz and HFC-245eb at least 39 weight percent E-HFO-1438mzz. Also of particular note are compositions containing E-HFO-1438mzz and HFC-245eb at least 40 weight percent E-HFO-1438mzz.

Also of particular utility are any compositions wherein the working fluid has a low GWP. Compositions for use in a high temperature heat pump will have GWP less than 150 when the amount of E-HFO-1438mzz is at least 54 weight percent in a composition consisting essentially of E-HFO-1438mzz and optionally HFC-245eb.

Any of the compositions comprising E-HFO-1438mzz and optionally HFC-245eb may also comprise and/or be used in combination with at least one lubricant selected from the group consisting of polyalkylene glycols, polyol esters, polyvinylethers, mineral oils, alkylbenzenes, synthetic paraffins, synthetic naphthenes, and poly(alpha)olefins.

Useful lubricants include those suitable for use with high temperature heat pump apparatus. Among these lubricants are those conventionally used in vapor compression refrigeration apparatus utilizing chlorofluorocarbon refrigerants. In one embodiment, lubricants comprise those commonly known as "mineral oils" in the field of compression refrigeration lubrication. Mineral oils comprise paraffins (i.e., straight-chain and branched-carbon-chain, saturated hydrocarbons), naphthenes (i.e. cyclic paraffins) and aromatics (i.e. unsaturated, cyclic hydrocarbons containing one or more rings characterized by alternating double bonds). In one embodiment, lubricants comprise those commonly known as "synthetic oils" in the field of compression refrigeration lubrication. Synthetic oils comprise alkylaryls (i.e. linear and branched alkyl alkylbenzenes), synthetic paraffins and naphthenes, and poly(alphaolefins). Representative conventional lubricants are the commercially available BVM 100 N (paraffinic mineral oil sold by BVA Oils), naphthenic mineral oil commercially available from Crompton Co. under the trademarks Suniso^{®} 3GS and Suniso^{®} 5GS, naphthenic mineral oil commercially available from Pennzoil under the trademark Sontex^{®} 372LT, naphthenic mineral oil commercially available from Calumet Lubricants under the trademark Calumet^{®} RO-30, linear alkylbenzenes commercially available from Shrieve Chemicals under the trademarks Zerol^{®} 75, Zerol^{®} 150 and Zerol^{®} 500, and HAB 22 (branched alkylbenzene sold by Nippon Oil).

Useful lubricants may also include those which have been designed for use with hydrofluorocarbon refrigerants and are miscible with refrigerants of the present invention under compression refrigeration and air-conditioning apparatus' operating conditions. Such lubricants include, but are not limited to, polyol esters (POEs) such as Castrol^{®} 100 (Castrol, United Kingdom), polyalkylene glycols (PAGs) such as RL-488A from Dow (Dow Chemical, Midland, Michigan), polyvinyl ethers (PVEs), and polycarbonates (PCs).

Lubricants are selected by considering a given compressor's requirements and the environment to which the lubricant will be exposed.

Of note are high temperature lubricants with stability at high temperatures. The highest temperature the heat pump will achieve will determine which lubricants are required. In one embodiment, the lubricant must be stable at temperatures of at least 55°C. In another embodiment the lubricant must be stable at temperatures of at least 150°C. In another embodiment, the lubricant must be stable at temperatures of at least 155°C. In another embodiment the lubricant must be stable at temperatures of at least 165°C. Of particular note are poly alpha olefins (POA) lubricants with stability up to about 200°C and polyol ester (POE) lubricants with stability at temperatures up to about 200 to 220°C. Also of particular note are perfluoropolyether lubricants that have stability at temperatures from about 220 to about 350°C. PFPE lubricants include those available from DuPont (Wilmington, DE) under the trademark Krytox^{®}, such as the XHT series with thermal stability up to about 300 to 350°C. Other PFPE lubricants include those sold under the trademark Demnum^{™} from Daikin Industries (Japan) with thermal stability up to about 280 to 330°C, and available from Ausimont (Milan, Italy), under the trademarks Fomblin^{®} and Galden^{®} such as that available under the trademark Fomblin^{®}-Y or Fomblin^{®}-Z with thermal stability up to about 220 to 260°C.

For high temperature condenser operation (associated with high temperature lifts and high compressor discharge temperatures) formulations of working fluid (e.g. E-HFO-1438mzz or E-HFO-1438mzz and HFC-245eb) and lubricants with high thermal stability (possibly in combination with oil cooling or other mitigation approaches) will be advantageous.

In one embodiment, the present invention includes a composition comprising: (a) E-HFO-1438mzz and optionally HFC-245eb; and (b) at least one lubricant suitable for use at a temperature of at least about 100°C. Of note are embodiments wherein the lubricant is suitable for use at a temperature of at least about 150°C. Also of note are embodiments wherein the lubricant is suitable for use at a temperature of at least about 165°C.

In one embodiment, any of the compositions of this invention may further comprise 0.01 weight percent to 5 weight percent of a stabilizer, free radical scavenger or antioxidant. Such other additives include but are not limited to, nitromethane, hindered phenols, hydroxylamines, thiols, phosphites, or lactones. Single additives or combinations may be used.

Optionally, in another embodiment, certain refrigeration, air-conditioning, or heat pump system additives may be added, as desired, to the any of the working fluids as disclosed herein in order to enhance performance and system stability. These additives are known in the field of refrigeration and air-conditioning, and include, but are not limited to, anti wear agents, extreme pressure lubricants, corrosion and oxidation inhibitors, metal surface deactivators, free radical scavengers, and foam control agents. In general, these additives may be present in the working fluids in small amounts relative to the overall composition. Typically concentrations of from less than 0.1 weight percent to as much as 3 weight percent of each additive are used. These additives are selected on the basis of the individual system requirements. These additives include members of the triaryl phosphate family of EP (extreme pressure) lubricity additives, such as butylated triphenyl phosphates (BTPP), or other alkylated triaryl phosphate esters, e.g. Syn-0-Ad 8478 from Akzo Chemicals, tricresyl phosphates and related compounds. Additionally, the metal dialkyl dithiophosphates (e.g., zinc dialkyl dithiophosphate (or ZDDP), Lubrizol 1375 and other members of this family of chemicals may be used in compositions of the present invention. Other antiwear additives include natural product oils and asymmetrical polyhydroxyl lubrication additives, such as Synergol TMS (International Lubricants). Similarly, stabilizers such as antioxidants, free radical scavengers, and water scavengers may be employed. Compounds in this category can include, but are not limited to, butylated hydroxy toluene (BHT), epoxides, and mixtures thereof. Corrosion inhibitors include dodecyl succinic acid (DDSA), amine phosphate (AP), oleoyl sarcosine, imidazone derivatives and substituted sulfphonates. Metal surface deactivators include areoxalyl bis (benzylidene) hydrazide (CAS reg no. 6629-10-3), N,N'-bis(3,5-di-tert-butyl-4-hydroxyhydrocinnamoylhydrazine (CAS reg no. 32687-78-8), 2,2,'- oxamidobis-ethyl-(3,5-di-tert-butyl-4-hydroxyhydrocinnamate (CAS reg no. 70331-94-1), N,N'-(disalicyclidene)-1,2-diaminopropane (CAS reg no. 94-91-7) and ethylenediaminetetra-acetic acid (CAS reg no. 60-00-4) and its salts, and mixtures thereof.

Any of the present compositions may include stabilizers comprising at least one compound selected from the group consisting of hindered phenols, thiophosphates, butylated triphenylphosphorothionates, organo phosphates, or phosphites, aryl alkyl ethers, terpenes, terpenoids, epoxides, fluorinated epoxides, oxetanes, ascorbic acid, thiols, lactones, thioethers, amines, nitromethane, alkylsilanes, benzophenone derivatives, aryl sulfides, divinyl terephthalic acid, diphenyl terephthalic acid, ionic liquids, and mixtures thereof. Representative stabilizer compounds include but are not limited to tocopherol; hydroquinone; t-butyl hydroquinone; monothiophosphates; and dithiophosphates, commercially available from Ciba Specialty Chemicals, Basel, Switzerland, hereinafter "Ciba," under the trademark Irgalube^{®} 63; dialkylthiophosphate esters, commercially available from Ciba under the trademarks Irgalube^{®} 353 and Irgalube^{®} 350, respectively; butylated triphenylphosphorothionates, commercially available from Ciba under the trademark Irgalube^{®} 232; amine phosphates, commercially available from Ciba under the trademark Irgalube^{®} 349 (Ciba); hindered phosphites, commercially available from Ciba as Irgafos^{®} 168; a phosphate such as (Tris-(di-tert-butylphenyl), commercially available from Ciba under the trademark Irgafos^{®} OPH; (Di-n-octyl phosphite); and iso-decyl diphenyl phosphite, commercially available from Ciba under the trademark Irgafos^{®} DDPP; anisole; 1,4-dimethoxybenzene; 1,4-diethoxybenzene; 1,3,5-trimethoxybenzene; d-limonene; retinal; pinene; menthol; Vitamin A; terpinene; dipentene; lycopene; beta carotene; bornane; 1,2-propylene oxide; 1,2-butylene oxide; n-butyl glycidyl ether; trifluoromethyloxirane; 1,1-bis(trifluoromethyl)oxirane; 3-ethyl-3-hydroxymethyl-oxetane, such as OXT-101 (Toagosei Co., Ltd); 3-ethyl-3-((phenoxy)methyl)-oxetane, such as OXT-211 (Toagosei Co., Ltd); 3-ethyl-3-((2-ethyl-hexyloxy)methyl)-oxetane, such as OXT-212 (Toagosei Co., Ltd); ascorbic acid; methanethiol (methyl mercaptan); ethanethiol (ethyl mercaptan); Coenzyme A; dimercaptosuccinic acid (DMSA); grapefruit mercaptan ((R)-2-(4-methylcyclohex-3-enyl)propane-2-thiol)); cysteine ((R)-2-amino-3-sulfanyl-propanoic acid); lipoamide (1,2-dithiolane-3-pentanamide); 5,7-bis(1,1-dimethylethyl)-3-[2,3(or 3,4)-dimethylphenyl]-2(3H)-benzofuranone, commercially available from Ciba under the trademark Irganox^{®} HP-136; benzyl phenyl sulfide; diphenyl sulfide; diisopropylamine; dioctadecyl 3,3'-thiodipropionate, commercially available from Ciba under the trademark Irganox^{®} PS 802 (Ciba); didodecyl 3,3'-thiopropionate, commercially available from Ciba under the trademark Irganox^{®} PS 800; di-(2,2,6,6-tetramethyl-4-piperidyl)sebacate, commercially available from Ciba under the trademark Tinuvin^{®} 770; poly-(N-hydroxyethyl-2,2,6,6-tetramethyl-4-hydroxy-piperidyl succinate, commercially available from Ciba under the trademark Tinuvin^{®} 622LD (Ciba); methyl bis tallow amine; bis tallow amine; phenol-alpha-naphthylamine; bis(dimethylamino)methylsilane (DMAMS); tris(trimethylsilyl)silane (TTMSS); vinyltriethoxysilane; vinyltrimethoxysilane; 2,5-difluorobenzophenone; 2',5'-dihydroxyacetophenone; 2-aminobenzophenone; 2-chlorobenzophenone; benzyl phenyl sulfide; diphenyl sulfide; dibenzyl sulfide; ionic liquids; and others.

In one embodiment, ionic liquid stabilizers comprise at least one ionic liquid. Ionic liquids are organic salts that are liquid or have melting points below 100°C. In another embodiment, ionic liquid stabilizers comprise salts containing cations selected from the group consisting of pyridinium, pyridazinium, pyrimidinium, pyrazinium, imidazolium, pyrazolium, thiazolium, oxazolium and triazolium; and anions selected from the group consisting of [BF₄]-, [PF₆]-, [SbF₆]-, [CF₃SO₃]-, [HCF₂CF₂SO₃]-, [CF₃HFCCF₂SO₃]-, [HCCIFCF₂SO₃]-, [(CF₃SO₂)₂N]-, [(CF₃CF₂SO₂)₂N]-, [(CF₃SO₂)₃C]-, [CF₃CO₂]-, and F-. Representative ionic liquid stabilizers include emim BF₄ (1-ethyl-3-methylimidazolium tetrafluoroborate); bmim BF₄ (1-butyl-3-methylimidazolium tetraborate); emim PF₆ (1-ethyl-3-methylimidazolium hexafluorophosphate); and bmim PF₆ (1-butyl-3-methylimidazolium hexafluorophosphate), all of which are available from Fluka (Sigma-Aldrich).

### EXAMPLES

The concepts described herein will be further described in the following examples, which do not limit the scope of the invention described in the claims.

### EXAMPLE 1

### High temperature heating with heat pumps operating with neat E-HFO-1438mzz as the working fluid: T_{cond}=85°C; Tₑᵥₐₚ=25°C

Table 2 summarizes the performance of a heat pump operating between the evaporator and condenser temperatures using E-HFO-1438mzz under the following conditions:

| | |
|---|---|
| Condenser Temperature | = 85.0°C |
| Evaporator Temperature | = 25.0°C |
| Sub-cooling | = 15.0°C |
| Superheat added at the evaporator | = 20.0°C |
| Compressor Efficiency | = 0.80 |

**TABLE 2**

| | **E-HFO-1438mzz** |
|---|---|
| Evaporator Pressure (kPa) | 86.0 |
| Condenser Pressure (kPa) | 577 |
| COP Heating | 4.246 |
| Heating Capacity (kJ/m³) | 858 |

E-HFO-1438mzz could enable the design and operation of dynamic (e.g. centrifugal) or positive displacement (e.g. screw or scroll) heat pumps for upgrading heat available at low temperatures to meet demands for heating at higher temperatures. The available low temperature heat would be supplied to the evaporator and the high temperature heat would be extracted at the condenser. For example, waste heat could be available to be supplied to the evaporator of a heat pump operating at 25°C at a location (e.g. a hospital) where heat from the condenser, operating at 85°C, could be used to heat water (e.g. for hydronic space heating or other service).

E-HFO-1438mzz enables good performance while offering no flammability and attractive environmental properties (i.e no ODP and low GWP).

### Example 2

### High temperature heating with heat pumps operating with neat E-HFO-1438mzz as the working fluid: T_{cond}=130°C: Tₑᵥₐₚ=100°C

In some cases heat may be available from various other sources (e.g. waste heat from process streams, geothermal heat or solar heat) at temperatures higher than suggested in Example 1, while heating at even higher temperatures may be required. For example, waste heat may be available at 100°C while heating at 130°C may be required for an industrial application. The lower temperature heat could be supplied to the evaporator of a dynamic (e.g. centrifugal) or positive displacement (e.g., reciprocating, screw or scroll) heat pump to be uplifted to the desired temperature of 130°C and be delivered at the condenser.

Table 3 summarizes the performance of a heat pump operating with E-HFO-1438mzz for uplifting heat from 100 to 130°C at the following conditions:

| | |
|---|---|
| Condenser Temperature | = 130°C |
| Evaporator Temperature | = 100°C |
| Sub-cooling | = 0.0°C |
| Superheat added at the evaporator | = 9.0°C |
| Compressor Efficiency | = 0.80 |

**Table 3**

| | **E-HFO-1438mzz** |
|---|---|
| Evaporator Pressure (kPa) | 828 |
| Condenser Pressure (kPa) | 1,546 |
| COP Heating | 6.567 |
| Heating Capacity (kJ/m³) | 3863 |

E-HFO-1438mzz enables good performance while offering non-flammability and attractive environmental properties (i.e no ODP and low GWP).

### EXAMPLE 3

### Heat Pump Operating With a E-HFO-1438mzz/HFC-245eb (35/65 wt%) Blend at a condensing temperature of 100 °C

Table 4 summarizes the performance of a heat pump operating between the evaporator and condenser temperatures using an E-HFO-1438mzz/HFC-245eb (35/65 weight percent) blend ("Blend B") as compared to HFC-245fa under the following conditions:

| | |
|---|---|
| Condenser Temperature | = 100°C |
| Evaporator Temperature | = 50°C |
| Sub-cooling | = 5.0°C |
| Superheat added at the evaporator | = 5.0°C |
| Compressor Efficiency | = 0.70 |

**TABLE 4**

| | **Blend B** | **HFC-245fa** |
|---|---|---|
| E-HFO-1438mzz (wt%) | 35 | |
| HFC-(wt%)245eb | 65 | |
| Blend GWP | 197 | 1030 |
| T_{cr}(°C) | 154.1 | 154.0 |
| Pₑᵥₐₚ (MPa) | 0.28 | 0.34 |
| Pcond (MPa) | 1.06 | 1.26 |
| PR | 3.81 | 3.68 |
| T_{disch} (°C) | 100 | 101 |
| COPₕ | 4.316 | 4.346 |
| CAPₕ | 2233 | 2707 |
| Condenser Glide (°C) | 0.07 | n/a |
| Evaporator Glide (°C) | 0.01 | n/a |

In Table 4, Pₑᵥₐₚ is pressure of the evaporator; P_{cond} is pressure of the condenser; PR is pressure ratio (P_{cond}/Pₑᵥₐₚ); T_{disch} is the temperature at the compressor discharge; COP is coefficient of performance (a measure of energy efficiency); and volumetric CAP is volumetric capacity. Table 4 indicates that blend B would enable the operation of a heat pump realizing a condensing temperature of 100 °C with performance comparable to HFC-245fa. The evaporator and condenser glide with blend B are negligible which could be advantageous for large heat pumps with flooded evaporators and condensers. Blend B has a substantially lower GWP than HFC-245fa and is expected to be non-flammable. E-HFO-1438mzz/HFC-245eb blends with lower GWPs than blend B can be formed without substantial loss of performance by increasing the proportion of the E-HFO-1438mzz in the blend. For example, an E-HFO-1438mzz/HFC-245eb blend containing more than 54 weight percent E-HFO-1438mzz would have a GWP lower than 150.

### EXAMPLE 4

### Heat Pump Operating With a E-HFO-1438mzz/HFC-245eb (35/65 wt%) Blend at a condensing temperature of 135 °C

Table 5 compares the performance of a heat pump with an E-HFO-1438mzz/HFC-245eb (35/65 wt%) blend ("Blend B") as the working fluid operating at a condensing temperature of 135 °C to performance with HFC-245fa. The evaporator receives heat at Tₑᵥₐₚ=80 °C.

| | |
|---|---|
| Condenser Temperature | = 135°C |
| Evaporator Temperature | = 80°C |
| Sub-cooling | = 10°C |
| Superheat added at the evaporator | = 10°C |
| Compressor Efficiency | = 0.70 |

**TABLE 5**

| | **Blend B** | **HFC-245fa** |
|---|---|---|
| E-HFO-1438mzz (wt%) | 35 | |
| HFC-245eb (wt%) | 65 | |
| Blend GWP | 197 | |
| T_{cr} (°C) | 154.1 | 154.0 |
| Pevap (MPa) | 0.65 | 0.79 |
| Pcond (MPa) | 2.16 | 2.58 |
| PR | 3.31 | 3.27 |
| T_{disch} (°C) | 139 | 141 |
| COPₕₑₐₜ | 3.951 | 3.986 |
| CAPₕₑₐₜ | 4056 | 4892 |
| Condenser Glide (°C) | 0.10 | n/a |
| Evaporator Glide (°C) | 0.03 | n/a |

In Table 5, Pₑᵥₐₚ is pressure of the evaporator; P_{cond} is pressure of the condenser; PR is pressure ratio (P_{cond}/Pₑᵥₐₚ); T_{disch} is the temperature at the compressor discharge; COP is coefficient of performance (a measure of energy efficiency); and volumetric CAP is volumetric capacity. Table 5 indicates that blend B would enable the operation of a heat pump realizing a condensing temperature of 135 °C with performance comparable to HFC-245fa. The evaporator and condenser glide with blend B are negligible which could be advantageous for large heat pumps with flooded evaporators and condensers. Blend B has a substantially lower GWP that HFC-245fa and is expected to be non-flammable. Moreover, the condensing pressure with blend B, 2.16 MPa, is well within the limits of most commonly available large centrifugal heat pumps. The condensing pressure with HFC-245fa, 2.58 MPa, exceeds the maximum permissible working pressure of most commonly available large centrifugal heat pumps. Some compressor modifications would be most likely required with both blend B and HFC-245fa to accommodate the relatively high discharge temperatures in Table 5.

## Claims

1. A method for producing heating in a high temperature heat pump comprising condensing a vapor working fluid comprising E-1,1,1,4,4,5,5,5-octafluoro-2-pentene (E-HFO-1438mzz), in a condenser, thereby producing a liquid working fluid; wherein the condenser operating temperature is greater than 55°C.

2. The method of claim 1 further comprising passing a heat transfer medium through the condenser, whereby said condensation of working fluid heats the heat transfer medium, and passing the heated heat transfer medium from the condenser to a body to be heated.

3. The method of claim 2, further comprising compressing the working fluid vapor in a compressor selected from the group consisting of axial, centrifugal, reciprocating, screw, and scroll.

4. The method of claim 1 further comprising passing a fluid to be heated through said condenser, thus heating the fluid.

5. The method of claim 1 wherein heat is exchanged between at least two heating stages, comprising:
absorbing heat in a working fluid in a heating stage operated at a selected condenser temperature and transferring this heat to the working fluid of another heating stage operated at a higher condenser temperature; wherein the working fluid of the heating stage operated at the higher condenser temperature comprises E-HFO-1438mzz.

6. A method of raising the maximum feasible condenser operating temperature in a high temperature heat pump apparatus comprising charging the high temperature heat pump with a working fluid comprising E-HFO-1438mzz.

7. The method of claim 6 wherein the maximum feasible condenser operating temperature is raised to a temperature greater than about 120°C.

8. A high temperature heat pump apparatus containing a working fluid comprising E-HFO-1438mzz, said apparatus comprising (a) an evaporator through which a working fluid flows and is evaporated; (b) a compressor in fluid communication with the evaporator that compresses the evaporated working fluid to a higher pressure; (c) a condenser in fluid communication with the compressor through which the high pressure working fluid vapor flows and is condensed; and (d) a pressure reduction device in fluid communication with the condenser wherein the pressure of the condensed working fluid is reduced and said pressure reduction device further being in fluid communication with the evaporator such that the working fluid then repeats flow through components (a), (b), (c) and (d) in a repeating cycle.

9. The high temperature heat pump apparatus of claim 8 comprising a compressor selected from the group consisting of axial, centrifugal, reciprocating, screw, and scroll.

10. The high temperature heat pump apparatus of claim 8 having at least two heating stages arranged as a cascade heating system, each stage circulating a working fluid therethrough, wherein heat is transferred to the final stage from the preceding stage and wherein the heating fluid of the final stage comprises E-HFO-1438mzz.

11. The high temperature heat pump apparatus of claim 10 having at least two heating stages arranged as a cascade heating system, each stage circulating a working fluid therethrough comprising:
(a) a first expansion device for reducing the pressure and temperature of a first working fluid liquid;
(b) an evaporator in fluid communication with the first expansion device having an inlet and an outlet,;
(c) a first compressor in fluid communication with the evaporator and having an inlet and an outlet;
(d) a cascade heat exchanger system in fluid communication with the first compressor outlet having:
(i) a first inlet and a first outlet, , and
(ii) a second inlet and a second outlet in thermal communication with the first inlet and outlet;
(e) a second compressor in fluid communication with the second outlet of the cascade heat exchanger system and having an inlet and an outlet;
(f) a condenser in fluid communication with the second compressor and having an inlet and an outlet; and
(g) a second expansion device in fluid communication with the condenser;
wherein the second working fluid comprises E-HFO-1438mzz.

12. The high temperature heat pump apparatus of claim 10, wherein the first working fluid comprises at least one compound selected from the group consisting of HFO-1234yf, E-HFO-1234ze, HFC-134a, HFC-134 and HFC-227ea.

13. The high temperature heat pump apparatus of claim 10, wherein the working fluid of the stage preceding the final stage comprises at least one compound selected from the group consisting of HFO-1234yf, E-HFO-1234ze, HFC-134a, HFC-134 and HFC-227ea.
